# FASCICULE DE BREVET EUROPEEN

(11) **EP 4 234 520 B1**
(45) Date de publication et mention de la délivrance du brevet: **03.06.2026**
(21) Numéro de dépôt: 23167474.8
(22) Date de dépôt: 05.07.2021
(51) Int. Cl.: C05D 3/02, C05D 9/00, C05D 9/02, C05G 5/10, C05G 5/12, C05G 5/27

(54) **COMPOSITION BIOSTIMULANTE POUR VÉGÉTAUX**
PFLANZENBIOSTIMULIERENDE ZUSAMMENSETZUNG
PLANT BIOSTIMULANT COMPOSITION

(30) Priorité: 07.07.2020 EP 20184531
(43) Date de publication de la demande: 30.08.2023
(62) Demande divisionnaire de: 21183795.0
(73) Titulaire: PN S.A., 5627 Mondorf-les-Bains (LU)
(72) Inventeur: NIESNER, Jean-Martin, 57150 Creutzwald (FR); NIESNER, Pierre, 5627 Mondorf-les-Bains (LU)
(74) Mandataire: Aronova

(56) Documents cités:
- EP-A1- 2 246 318
- EP-A2- 0 634 380
- WO-A1-2019/021250
- WO-A1-2019/206955
- US-A1- 2019 014 788

## Description

### Domaine Technique

De manière générale, l'invention concerne une composition biostimulante, en particulier minérale, principalement pour une application foliaire. L'invention concerne, plus précisément, une composition biostimulante comprenant (i) de la zéolithe micronisée et (ii) des algues calcaires micronisées.

### Arrière-plan technologique

Le secteur des biostimulants dans le domaine agricole est en pleine croissance ces dernières années. Cette croissance est liée à la constante pression environnementale et sociétale que subissent les agriculteurs par rapport à l'utilisation de produits de synthèse, mais aussi à la prise de conscience du rôle essentiel des relations entre micro-organismes du sol et les végétaux : c'est ce qu'on caractérise d'agriculture durable.

Dans ce contexte, l'expression « composition biostimulante » est utilisée pour désigner une composition comprenant au moins une substance (notamment la zéolithe) pouvant être qualifiée comme « biostimulant » ou « biostimulant des végétaux » au sens du Règlement (UE) 2019/1009, c.-à-d. comme désignant une substance qui stimule les processus de nutrition des végétaux indépendamment des éléments nutritifs qu'elle contient, dans le seul but d'améliorer l'efficacité d'utilisation des éléments nutritifs, la tolérance au stress abiotique, les caractéristiques qualitatives et/ou la disponibilité des éléments nutritifs confinés dans le sol ou la rhizosphère. On notera toutefois que des réalisations concrètes de la composition selon l'invention pourront être mises sur le marché sous d'autres appellations, comme, par exemple, « engrais », « engrais comprenant des biostimulants », « matière fertilisante », « combinaison de fertilisants », etc. Le choix de l'appellation dépendra, notamment, de la législation et des normes à respecter dans le pays de la mise sur le marché ainsi que de la composition spécifique du produit.

Les inventeurs se sont fixé comme objectif de développer un produit naturel et utilisable aussi bien en agriculture biologique que conventionnelle. Sans danger pour l'utilisateur, ce produit devait également avoir une mise en œuvre simple, une application avec du matériel classique, pour pouvoir être utilisé par le plus grand nombre d'agriculteurs. Un autre aspect visé était de proposer un produit compatible avec des produits classiques utilisés en défense des végétaux, pouvant être utilisés en combinaison (en complément) de ceux-ci ou en tant que produit de substitution (totale ou partielle).

Le document EP 2 246 318 A1 décrit un matériau à structure poreuse, comprenant du silicate, et un composé sélectionné parmi les carbonates, les hydroxydes ou oxides d'éléments alcalins ou alcalino-terreux, ainsi que les mélanges de ceux-ci. Il est mentionné que le matériau peut servir comme fertilisant de sols.

Le document US 2019/0014788 A1 divulgue une composition pour la nutrition, la revigoration et la protection de plantes, comprenant des algues et un excipient agrochimiquement acceptable sous forme de suspension aqueuse. Le document WO 2019/021250 A1 décrit une composition granulaire à base d'algues pour les mêmes utilisations. La composition comprend aussi un excipient agrochimiquement acceptable.

### Description générale de l'invention

Un premier aspect de l'invention concerne une composition biostimulante pour végétaux, comprenant de la zéolithe micronisée et des algues calcaires (de préférence mortes) micronisées, comme p.ex. le lithothamne. Le rapport massique entre la teneur en zéolithe et la teneur en algues calcaires est compris entre 0.1 et 10, de préférence entre 0,25 et 4. La granulométrie de la zéolithe, respectivement des algues calcaires, est telle que le diamètre D90 soit inférieur à 20 µm, lorsqu'il est mesuré par la granulométrie laser en accord avec la norme ISO 13320:2020 sur la base du modèle de diffraction de Fraunhofer. La zéolithe et les algues calcaires représentent ensemble au moins 60% en masse, de préférence au moins 75% en masse, et plus de préférence encore au moins 90% en masse, de la matière solide (de la matière sèche ayant une teneur en eau pondérale résiduelle inférieure à 3%, obtenue après évaporation de l'eau éventuellement contenue) de la composition. De préférence, tout composant solide autre que la zéolite et une algue calcaire est présent dans la composition avec une teneur massique individuelle ne dépassant pas 50% de la plus petite valeur parmi la teneur massique en algues calcaires et la teneur massique en zéolithe. De préférence, la proportion en masse dans la composition de tout composant solide autre que la zéolite et une algue calcaire ne dépasse pas 5 %.

Dans le cas particulièrement préféré, le rapport massique entre la teneur en zéolithe et la teneur en algues calcaires est compris entre 0,25 et 4, la zéolithe et les algues calcaires représentent ensemble au moins 90% en masse de la matière solide de la composition et la teneur massique individuelle de tout autre composant solide ne dépasse pas 50% de la plus petite valeur parmi la teneur massique en algues calcaires et la teneur massique en zéolithe.

L'invention combine la zéolithe et les algues calcaires sous forme micronisée dans un produit unique. Il convient de noter que la zéolithe est présente dans la composition en tant que composant actif principal au même titre que les algues calcaires. En d'autres mots, la zéolithe ne peut pas être considérée comme un excipient, mais contribue de manière active à l'efficacité de la composition. La combinaison de la zéolithe et des algues calcaires conduit effectivement à un effet de synergie dans la composition biostimulante.

En application foliaire, la composition encourage le métabolisme des plantes et de ce fait facilite l'absorption et l'assimilation des éléments nutritifs et de l'eau. L'utilisation de la composition permet ainsi de réduire la quantité d'engrais appliqués au sol ou sur les plantes tout en évitant une perte du rendement de la culture, ainsi que de réduire les besoins en eau. Il a aussi été montré que la composition biostimulante permet d'obtenir des rendements meilleurs que sur des cultures témoins.

Appliquée en culture biologique ou conventionnelle, la composition biostimulante permet d'améliorer le rendement des cultures, de limiter le risque de développement de maladies et d'améliorer les qualités intrinsèques et visuelles des produits récoltés.

Appliquée au sol, la composition limite le lessivage de l'azote par une rétention réversible. Ce lessivage est souvent cause de faim d'azote sur des cultures biologiques.

De préférence, la composition biostimulante est conditionnée sous forme de poudre mouillable (en anglais « wettable powder »), sous forme de concentré en suspension (en anglais « suspension concentrate ») ou encore sous forme de granulés dispersibles dans l'eau (en anglais : « water dispersible granules »). A l'utilisation, la composition est mélangée à de l'eau, de sorte à former une suspension pouvant être pulvérisée sur les cultures.

Sauf mention expresse contraire dans ce texte, toutes les mesures de granulométrie font référence aux mesures que l'on obtient par la granulométrie laser en accord avec la norme ISO 13320:2020 sur la base du modèle de diffraction de Fraunhofer (diamètres correspondant aux volumes sphériques équivalents). La granulométrie des ingrédients principaux (zéolithe et algues calcaires) est choisie de telle sorte qu'une fraction significative puisse pénétrer l'épiderme des feuilles en empruntant l'ouverture des stomates, appelée ostiole. Alors qu'il a pu être observé que des granulométries ayant un diamètre D90 inférieur à 20 µm produisent un effet bénéfique sur les végétaux traités, on préfère des compositions avec une proportion encore plus élevée de particules très fines. Ainsi, le diamètre D90 de la zéolithe est de préférence inférieur à 15 µm, et plus de préférence encore inférieur à 10 µm, et encore plus de préférence inférieur à 4 µm. De préférence, le diamètre D50 de la zéolithe est inférieur à 10 µm et plus de préférence encore inférieur à 5 µm, voire inférieur à 3 µm µm ou même inférieur à 1 µm. Le diamètre D90 des algues calcaires est de préférence inférieur à 15 µm, et plus de préférence encore inférieur à 10 µm, et encore plus de préférence inférieur à 4 µm. De préférence, le diamètre D50 des algues calcaires est inférieur à 8 µm et plus de préférence encore inférieur à 5 µm, voire inférieur à 3 µm ou même inférieur à 1 µm. De manière particulièrement préférée, aussi bien le diamètre D90 de la zéolithe que celui des algues calcaires est inférieur à 15 µm, de préférence inférieur à 10 µm. Également de manière particulièrement préférée, aussi bien le diamètre D50 de la zéolithe que celui des algues calcaires est inférieur à 10 µm, de préférence inférieur à 5 µm. De manière générale, que la composition soit sous forme liquide ou solide, plus la granulométrie est fine, meilleur est l'effet sur les plantes, Également plus la composition sera fine, plus la proportion du mélange soluble dans les acides des plantes sera importante. De manière particulièrement préférée, la granulométrie des deux ingrédients principaux (algues et zéolithe) est identique, les diamètres D90 et D50 étant choisis comme indiqué plus haut. Une granulométrie identique (commune) peut être obtenue par micronisation conjointe des ingrédients dans un broyeur après mélange sous forme plus grossière. On préfère actuellement une composition biostimulante selon l'invention dans laquelle la granulométrie des algues et de zéolithe est identique (p.ex. après micronisation conjointe), avec un diamètre D90 inférieur à 4 microns et un diamètre D50 inférieur à 1 micron.

Les algues calcaires peuvent comprendre du lithothamne (maërl). Selon des modes avantageux de la composition biostimulante, le lithothamne représente au moins 50% en masse, de préférence au moins 75% en masse, des algues calcaires. Le lithothamne étant une algue particulièrement tendre et riche, il peut représenter 100% des algues calcaires.

Il sera apprécié que les algues calcaires présentent une teneur naturellement élevée en carbonate de calcium ainsi qu'en carbonate de magnésium. Ces substances se présentent sous une forme facilement assimilable par les végétaux. Les algues calcaires contiennent en outre d'autres minéraux et oligoéléments tels que le manganèse, le zinc, le molybdène, le bore, le fer, le cuivre, etc.

De préférence, la composition biostimulante comprend entre 0,1% et 20%, avantageusement entre 2% et 4%, en masse d'oligoéléments bioassimilables sélectionnés parmi le manganèse, le zinc, le molybdène, le bore, le fer, le cuivre, le soufre, ainsi que les oxydes et sels bioassimilables de ceux-ci. Les algues calcaires marines peuvent contenir naturellement de 0,1% à 2% en masse d'oligoéléments. Pour arriver à une teneur plus élevée en oligoéléments bioassimilables, ceux-ci sont ajoutés au mélange de zéolithe et algues calcaires. Les oligoéléments rajoutés ne sont pas indispensables à l'effet biostimulant de la composition, mais serviront à couvrir une carence éventuelle.

Outre les algues calcaires, la composition biostimulante comprendre d'autres types de concrétions calcaires biogènes marines, de préférence non rocheuses, et/ou des débris coquilliers micronisés.

Les zéolithes sont des aluminosilicates cristallins de formule empirique générale : (M_{2/n}O).Al₂O₃.ySiO₂.zH₂O où M représente un élément des groupes IA ou IIA (métaux alcalins ou alcalino-terreux), n est la valence de M, y est entre 2 et 10 et z est le nombre de molécules d'eau (voir p.ex. « Introduction to Zeolite Science and Practice », E.M. Flanigen, J.C. Jansen, Herman van Bekkum, Elsevier, 1991, ISBN 0-444-88969-8). De préférence, la zéolithe contenue dans la composition comprend principalement la chabazite ou la clinoptilolite mais d'autres types tels que l'érionite, la mordénite, la phillipsite, sont également possibles. La zéolithe peut être naturelle ou de synthèse, la zéolithe naturelle étant préférée. Les zéolithes sont chargées naturellement en minéraux qui peuvent être différents suivant le type de zéolithe. La clinoptilolite est chargée naturellement en Ca et K, la chabazite est chargée naturellement en Ca, K, Fe et Mg, elle est la plus intéressante en agriculture.

Selon certains modes avantageux de l'invention, la zéolithe de la composition biostimulante comprend au moins 50% en masse, de préférence au moins 75% en masse, de chabazite et/ou de clinoptilolite.

Il sera apprécié que la composition biostimulante pourra contenir, pour certaines applications, des tensioactifs, des surfactants, de l'antigel, des mouillant-dispersants, des épaississants, des biocides, de l'antimousse, de l'eau, ou tout autre additif facilitant la préparation d'une suspension pulvérisable, ainsi que l'utilisation, l'application, le stockage, etc. de la composition biostimulante sous toutes ses formes.

Un autre aspect de l'invention concerne une suspension aqueuse comprenant entre 0,5% et 5% en masse, de préférence entre 0,5% et 2% en masse, par rapport à la matière solide, de composition biostimulante. Une telle suspension serait prête à l'emploi par pulvérisation.

Un autre aspect de l'invention concerne une méthode d'utilisation de la composition biostimulante telle que décrite dans ce document en agriculture. Une telle méthode comprend, de préférence, l'application foliaire de la composition biostimulante sur des plantes. Toutefois, une application au sol n'est pas exclue.

De préférence, le dosage de la composition biostimulante est tel qu'il apporte, par hectare et par application, entre 1 et 5 kg, de préférence entre 1,5 et 4 kg, de matière solide de la composition biostimulante.

Finalement, un aspect de l'invention concerne un procédé de préparation de la composition biostimulante qui permettra d'optimiser son efficacité. En l'occurrence, pour une efficacité optimale, on mélange minutieusement les algues calcaires et la zéolithe, en assurant l'homogénéité de des composants, dans un mélangeur (p.ex. un mélangeur à pales). A ce stage du procédé, les algues et la zéolithe sont encore plus grossières (p.ex. tailles entre 100 et 400 microns, voire plus).

Une fois un mélange homogène obtenu, on le micronise jusqu'à la taille souhaitée. La micronisation pourra se faire par voie sèche avec un appareil de type « jetmill » ou autre, ou alors par voie humide. Le choix du microniseur pourra être fait en fonction du type de la composition finale : poudre mouillable ou (concentré en) suspension.

Le mélange préalable et la micronisation conjointe (et simultanée) des deux composants principaux a pour effet une assimilation meilleure par les plantes, et une efficacité accrue sur le végétal peut ainsi être obtenue.

### Brève description des dessins

D'autres particularités et caractéristiques de l'invention ressortiront de la description détaillée de certains modes de réalisation avantageux présentés ci-dessous, à titre d'illustration, avec référence au dessin annexé qui montre :

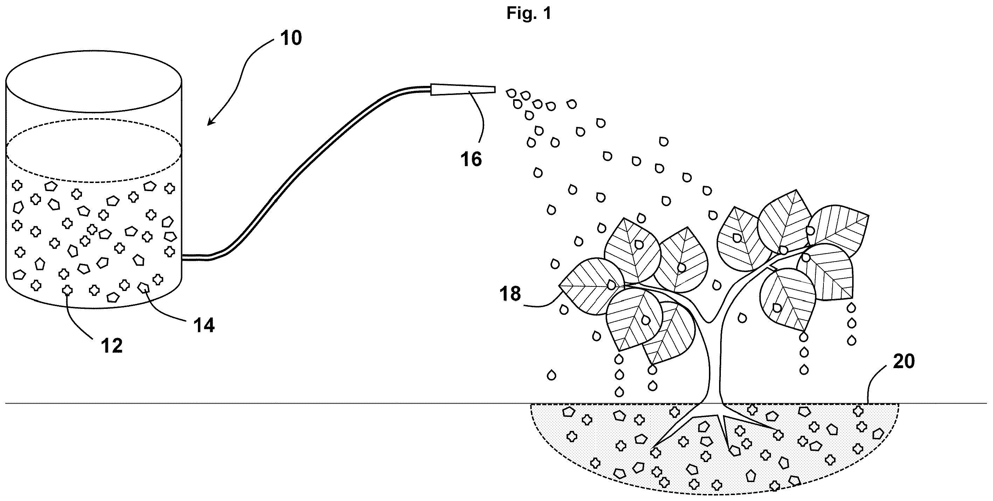

Fig. 1: Une illustration schématique de la composition biostimulante en suspension dans l'eau et son application sur les plantes.

### Description détaillée de l'invention

L'attrait de minéraux marins riches en carbonate de calcium pour l'agriculture résulte de leur structure tendre contenant des oligoéléments. Parmi eux, les algues calcaires, comme p.ex. le lithothamne, se classent en tête avec une solubilité carbonique particulièrement élevée. Le lithothamne est particulièrement riche en calcium (sous forme de carbonate de calcium) et en magnésium (sous forme de carbonate de magnésium) et renferme de multiples oligoéléments dont certains sont plutôt rares. La présente invention permet de valoriser davantage les minéraux marins, en augmentant leur assimilation et leur efficacité sur le végétal, notamment grâce à la zéolithe.

Pour les végétaux, le calcium est primordial durant la croissance des tissus cellulaires, notamment au niveau de la paroi des cellules. D'autre part, les racines sont les premières victimes d'une carence en calcium. En effet, dans un tel cas, les racines principales ne se développent pas correctement, l'exploitation du sol s'en trouve pénalisée et la nutrition NPK (azote, phosphore, potassium) diminuée.

Le magnésium quant à lui, nécessaire en moindre quantité, est un constituant vital de la chlorophylle et joue un rôle majeur dans le bon fonctionnement de la photosynthèse. Moins connu, il aide également à la bonne circulation du phosphore, primordial pour la transmission de l'énergie, via des activations d'enzymes.

Les oligoéléments, bien qu'absorbés en petites quantités par la culture (de quelques dizaines à quelques centaines de grammes par hectare) sont indispensables à la fois à la croissance et la santé des plantes.

Il est donc proposé un produit de base naturel, regroupant le maximum de ces caractéristiques (calcium, magnésium et oligoéléments), qui pourra ensuite être enrichi en minéraux ou oligoéléments spécifiques pour s'adapter plus précisément à différentes cultures.

Le lithothamne (phymatolithon calcareum) est une algue de la famille des Hapalidiaceae et de la sous-famille des Melobesioideae, produisant des concrétions calcaires. Il est issu de milieux marins, morts de préférence, et composé essentiellement de calcium et de magnésium sous forme de carbonates. Il est réputé pour sa facilité à concentrer les oligoéléments de l'eau de mer, et il est pauvre en métaux lourds. Sa solubilité carbonique particulièrement élevée (80% à 65 microns), traduit le fait que cet amendement tendre est à action rapide. La rapidité d'action augmente plus le lithothamne est broyé finement. Par « solubilité carbonique » on entend le pourcentage de carbonates solubilisés endéans deux heures à partir d'un échantillon de la matière à tester dans une eau saturée en acide carbonique. Le taux de carbonates solubilisés est mesuré par titration.

Le lithothamne broyé sous les 20 µm, avec, de préférence, une grande proportion en dessous de 15 µm, voire de 10 µm, en particulier en association à la zéolithe micronisée, est un biostimulant performant pour une application foliaire, car la tendreté, la finesse et la composition du produit permet une action particulièrement rapide du calcium, du magnésium, et des oligoéléments assimilés, par le végétal, l'assimilation étant favorisée par la zéolithe.

Une zéolithe est un aluminosilicate dont la structure est nanoporeuse. Les espaces vides sont connectés entre eux et sont initialement occupés par des cations et des molécules d'eau. Les cations et les molécules d'eau sont mobiles au sein de la structure, ce qui permet d'une part des échanges ioniques, et d'autre part une déshydratation partielle réversible.

Il existe de nombreuses zéolithes répertoriées en plusieurs familles, mais la clinoptilolite (zéolithe lamellaire-monoclinique) et la chabazite (zéolithe hexagonale-cubique) sont les plus efficaces dans l'agriculture de par leur composition en cations échangeables (Ca, K et Na) et leurs capacités d'échange cationique.

Il existe également des zéolithes synthétiques, mais on privilégie dans le contexte de l'invention les zéolithes naturelles, notamment ceux en provenance de gisements sélectionnés pour leur pureté.

Micronisé à une granulométrie fine (D90 < 20 µm, de préférence < 15 µm plus de préférence encore < 10 µm, et encore plus de préférence < 4 µm) et en application foliaire, grâce à sa structure nanoporeuse et sa capacité d'échange cationique, la zéolithe a des effets très bénéfiques sur les plantes et le sol, notamment :
∘ réduction du stress hydrique et, par la même occasion, du stress abiotique,
∘ protection contre le stress thermique en protégeant la surface de la feuille du rayonnement,
∘ capture du CO₂, ce qui augmente la photosynthèse au détriment de la photorespiration,
∘ favoriser la rétention et l'échange de différents cations et les relâcher en fonction des besoins de la plante,
∘ amélioration de la capacité d'échange cationique (CEC) du sol au fil des années par la partie de la zéolithe qui ruisselle au sol et fait office d'hydrorétenteur à proximité des racines sans variation de volume, sans engendrer de phytotoxicité, et en gardant une aération favorable au développement des microorganismes.

L'invention combine la zéolithe et les algues calcaires sous forme micronisée dans une composition. Comme exposé plus haut, ces deux produits de base possèdent chacun des propriétés intrinsèques très intéressantes. Lors des essais des produits individuellement et en mélange, une synergie entre les algues calcaires micronisées et la zéolithe micronisée a pu être observée.

Il convient de rappeler certains aspects du métabolisme des plantes. L'eau chargée en sels minéraux est absorbée par les radicelles et doit atteindre les vaisseaux de xylème par différentes voies pour nourrir la plante. La transpiration joue un rôle important dans l'absorption d'eau du sol, elle est le moteur de la circulation de sève brute. En effet, plus la plante transpire, plus la succion sera efficace, et donc la plante absorbera davantage la solution nutritive du sol. La transpiration cuticulaire ne représente que 5 à 10% de la transpiration totale. La transpiration se fait majoritairement au niveau des stomates, on parle alors de transpiration stomatique. Celle-ci varie suivant l'ouverture et la fermeture des stomates, directement liées aux différences de pressions osmotiques dans les cellules de garde les constituant. En effet, les stomates s'ouvrent et se ferment en fonction des forces osmotiques qui correspondent aux variations de la concentration de potassium intracellulaire. C'est également par les stomates que se fait l'absorption du CO₂ nécessaire à la photosynthèse. Une augmentation de la concentration de potassium va entrainer une turgescence des cellules de garde et l'ouverture des stomates, donc faciliter les mécanismes nutritifs et de photosynthèse.

Les ingrédients micronisés de la composition biostimulante ont une finesse telle que, appliqués sur les feuilles des cultures, ils pénètrent (en partie) l'épiderme des feuilles en empruntant l'ouverture des stomates, appelée ostiole.

La zéolithe, par sa structure nanoporeuse, sa charge négative et sa composition, facilite l'ouverture des stomates et permet des échanges réversibles des cations nutritifs, des molécules d'eau, et du CO₂ dans le mésophylle. Il en résulte une meilleure assimilation des éléments nutritifs, en particulier des minéraux et oligoéléments contenu dans les algues calcaires, et une amélioration du métabolisme et des processus photosynthétiques du végétal. La zéolithe induit une meilleure valorisation des algues calcaires.

Sous l'effet de la lumière, l'activité des ATPases membranaires responsables de l'entrée d'ion K⁺ est stimulée. Le K⁺ contenu dans la zéolithe s'accumule dans les vacuoles, facilitant l'entrée d'eau dans les cellules de garde et l'ouverture des stomates. L'ouverture des stomates permet à son tour une meilleure absorption des éléments minéraux et oligoéléments, particulièrement tendres et facilement assimilables, contenus dans les algues calcaires. De plus, l'assimilation de ces cations dans le mésophylle est encouragée par les mécanismes de stockage et redistribution induit par les particules de zéolithe, du fait de leur charge négative et leur structure nanoporeuse.

Une fois assimilés, les nutriments contenus dans les algues calcaires auront chacun leur rôle et effet spécifique sur des sites-clé tels que la structure des cellules, la fabrication de protéines, la synthèse de la chlorophylle ou l'activation d'enzymes. Les minéraux et oligoéléments limitent ainsi les risques de carence et garantissent un développement optimal des plantes.

L'ouverture des stomates, facilitée par la zéolithe, favorise la transpiration stomatique, et améliore donc la succion et l'absorption d'eau et des minéraux contenus dans le sol. La partie de la composition biostimulante ruisselée dans le sol agit en tant qu'amendement et assure une meilleure minéralisation du sol.

L'ouverture des stomates facilite l'absorption du CO₂, qui est stocké dans le mésophylle et favorise la photosynthèse.

La zéolithe a la capacité d'adsorber le CO₂ présent dans l'atmosphère pour l'échanger contre des molécules d'eau à la surface de la plante. Ceci augmente la quantité de CO₂ concentré dans le mésophylle, siège de la photosynthèse, et favorise ainsi le rendement photosynthétique. Ce mécanisme augmente l'efficacité de fixation du CO₂ et améliore le rendement de la culture. Il peut induire des saisons de croissance plus courtes. Le flux de transpiration stomatique étant supérieur au flux entrant du CO₂, il y a un risque de limitation du CO₂ par les molécules d'eau circulant en sens inverse. Cet effet sera mitigé par les échanges réversibles permis par la zéolithe, qui capte et distribue progressivement les molécules d'eau de la transpiration.

La zéolithe se fixe sur la cuticule et réduit le risque de sénescence foliaire dû à une sécheresse prolongée. Ce phénomène favorise également la photosynthèse et réduit le cycle de culture. Le film de protection créé sur la surface des feuilles permet de réduire l'apparition de spores et de champignons pathogènes. Cet effet résulte de la capacité de la zéolithe à capter et retenir l'eau. Un effet complémentaire est le résultat de la forme des cristaux de zéolithe. Par exemple, la forme pseudocubique et angulaire de la zéolithe chabazite crée une surface rugueuse et inhospitalière sur les végétaux, formant ainsi une barrière protectrice contre les insectes phytophages.

Au fil des aspersions, la partie de la composition biostimulante qui ruisselle au sol, aura des effets considérables et cela grâce à la surface de contact importante des ingrédients micronisés, et en particulier de la zéolithe dont la surface peut représenter plusieurs centaines de m² par gramme. Ceci se traduira par une amélioration de la CEC (capacité d'échange cationique) grâce aux propriétés des zéolithes à fixer les cations échangeables, l'effet hydrorétenteur généré à proximité des racines sans variation de volume ni phytotoxicité, et en maintenant une aération du sol favorable au développement des microorganismes améliorant les qualités des sols compactés.

Ainsi, l'application foliaire de la composition biostimulante à des stades clefs, en concordance avec les développements des cultures, est l'application la plus efficace pour agir rapidement et durablement sur le métabolisme des plantes. Grâce à la granulométrie des produits de base dans la composition biostimulante, on arrive à faire pénétrer une partie significative de ces minéraux dans les plantes. Les autres parties qui ruissellent pour aller dans le sol, et celles qui restent fixés sur la surface des feuilles ne sont toutefois pas dénuées d'intérêt :
∘ Pour une action au cœur des plantes, les algues calcaires apportent du calcium tendre et facilement assimilable, contenant du magnésium, et d'autres oligoéléments. Le fait que les algues calcaires sont micronisées augmente la solubilité carbonique. La zéolithe micronisée qui pénètre dans les stomates des plantes met à disposition des canaux qui facilitent et améliorent l'assimilation, par le végétal, des minéraux et oligoéléments contenus dans les algues calcaires. En outre la zéolithe agit comme un tampon (du fait de sa capacité de retenir et de relâcher l'eau et les cations) pour les minéraux et oligoéléments apportés par les algues calcaires, ce qui semble améliorer leur assimilation par la plante. A part ceci, la zéolithe apporte l'effet antistress hydrique et abiotique.
∘ Sur les feuilles, une pellicule de zéolithe se dépose en formant un film. Ce film apporte une certaine protection contre les UV mais freine également l'évapotranspiration.
∘ Une partie de la composition biostimulante ruissèle jusqu'au sol. Elle ne sera cependant pas perdue. Du fait de la granulométrie, les fines particules possèdent une surface de contact importante. Les algues calcaires contribuent à une stabilisation du pH du sol au niveau des racines. La zéolithe améliore la CEC, l'aération à proximité des racines et ce de manière durable, car elle est non lessivable et pérenne dans le sol.

Ces effets se traduisent par un ensemble de phénomènes biologiques dans les végétaux, sur les végétaux, et dans le sol.

La zéolithe et les algues calcaires appliquées en même temps sous forme micronisée améliorent la croissance des plantes et l'assimilation des éléments nutritifs par les racines et par les feuilles. Des essais montrent qu'une amélioration du rendement des cultures ainsi que de la qualité et du calibre des produits récoltés peut être atteinte. Parmi les effets possibles, on peut citer :
∘ amélioration du métabolisme et de l'ensemble des processus naturels de développement du végétal ;
∘ meilleur développement racinaire, et meilleure faculté d'absorption des nutriments du sol ce qui permet de mieux valoriser et donc de réduire l'apport d'engrais ;
∘ résistance accrue des plantes au stress hydrique, et optimisation réelle de la consommation d'eau avec réduction des besoins d'irrigation ;
∘ résistance accrue des plantes aux stress biotique et abiotique ;
∘ amélioration des qualités des produits, p.ex. poids spécifique, teneur en huiles, taille des grains, calibre, taux de Brix, etc.
∘ augmentation de la biomasse (feuille, tige, racine, etc.)
∘ réduction des cycles de croissance des cultures (les plantes se développent plus vite) ;
∘ en agriculture conventionnelle : réduction des doses de produits phytosanitaires.

La composition biostimulante de l'invention est conçue pour être appliquée en suspension dans l'eau par pulvérisation classique (p.ex. au moyen d'un pulvérisateur équipé de buses à fente). Par application, on utilisera de préférence 200 litres par hectare ou plus de suspension contenant entre 0,5% et 5% en masse de la composition biostimulante. La composition biostimulante sera mélangée à l'eau de préférence en passant par la cuve de remplissage du pulvérisateur afin d'éviter le dépôt en fond de cuve. Également pour éviter que les particules solides se déposent, on maintiendra de préférence une agitation durant le remplissage et le temps de transport jusqu'aux champs.

La pulvérisation aura lieu de préférence en fin de journée par temps calme aux doses et stades préconisés. Ces stades sont propres à chaque type de culture, ils prennent en compte, entre autres, les contraintes techniques comme les hauteurs limites de traitement, mais surtout les stades clefs de nutrition et développement des plantes, ainsi que les périodes d'absorption des engrais azotés du sol.

On notera que le surdosage de la composition n'entrainera pas d'effet néfaste sur les cultures (p.ex. brûlures), mais pourra avoir comme incidence un dépôt en fond de cuve ou un colmatage des filtres, buses, etc.

De nombreux essais ont été réalisés, sur différentes cultures, en laboratoire sous conditions contrôlées ou aux champs, avec diverses formulations de la composition biostimulante conformément à l'invention. Ils ont permis de mettre en évidence l'efficacité de la composition biostimulante en comparaison notamment avec des formulations ne contenant que du lithothamne ou que de la zéolithe.

Pour chacun des essais décrits par la suite, les doses appliquées étaient sensiblement les mêmes, les stades variant en fonction des cultures. Les compositions selon l'invention utilisées dans le cadre des essais présentaient un rapport teneur en zéolithe à teneur en algues calcaires entre 0,25 et 4, la zéolithe et les algues calcaires représentaient ensemble au moins 90% en masse de la matière solide de la composition et la teneur massique individuelle de tout autre composant (autre que l'eau) ne dépassait pas 50% de la plus petite valeur parmi la teneur massique en algues calcaires et la teneur massique en zéolithe.

### Essai 1 - Vigne aux champs sur parcelles d'essais

Lieu : France, en région Champagne
Doses : 4 applications de 3 kg par hectare à des stades précis
Données évaluées : composante du rendement / notation vigueur plante entière / poids des baies par parcelle / taux de Brix
6 modalités : témoin / lithothamne micronisé seul / zéolithe micronisée seule / trois compositions biostimulantes selon l'invention différentes.

### Essai 2 - Vigne en laboratoire

Lieu : France, en région Alsace
Doses : 3 applications de 3 kg par hectare à des stades précis
Données évaluées : Effet sur la croissance / effet sur la fructification / mesure de la biomasse / mesure de la chlorophylle.
4 modalités : témoin / lithothamne micronisé seul / zéolithe micronisée seule / composition biostimulante selon l'invention.

### Essai 3 - Pommes de terre aux champs sur parcelles d'essais

Lieu : France, en région Seine-et-Marne
Doses : 4 applications de 3 kg par hectare à des stades précis
Données évaluées : notation vigueur / poids par parcelle / calibrage.
6 modalités : témoin / lithothamne micronisé seul / zéolithe micronisée seule / trois compositions biostimulantes selon l'invention différentes

### Essai 4 - Blé aux champs sur parcelles d'essais

Lieu : Belgique (université agricole de Wallonie)
Doses : 3 applications de 3kg par hectare à des stades précis
Données évaluées : composante du rendement / impact fertilisation azotée / impact maladie fongique
6 modalités : témoin / lithothamne micronisé seul / zéolithe micronisée seule / deux compositions biostimulantes différentes, conformes à l'invention / deux compositions biostimulantes différentes, conformes à l'invention, associée chacune à une modulation de fertilisation azotée.

### Essai 5 - Colza en laboratoire

Lieu : France, en région Alsace
Doses : 3 applications de 3 kg par hectare à des stades précis
Données évaluées : effets sur la croissance / mesure biomasse / mesure quantité relative de chlorophylle.
4 modalités : témoin / lithothamne micronisé seul / zéolithe micronisée seule / une composition biostimulante conforme à l'invention.

### Essai 6 - Colza en plein champs

Lieu : France, en région Moselle
Doses : 3 applications de 3 kg par hectare à des stades précis
Données évaluées : rendement et qualité des grains
2 modalités : témoin / une composition biostimulante conforme à l'invention.

### Essai 7 - Maïs grain en plein champs

Lieu : France, en région Seine et Marne
Doses : 2 applications de 4 kg par hectare à des stades précis
Données évaluées : rendement et qualité des grains
2 modalités : témoin / une composition biostimulante conforme à l'invention

### Essai 8 - Chanvre en plein champs

Lieu : France région Seine et Marne
Doses : 2 applications de 4 kg par hectare à des stades précis
Données évaluées : rendement et qualité des graines, rendement en paille
2 modalités : témoin / une composition biostimulante conforme à l'invention

### Essais d'écotoxicité

Etude d'impact sur les nappes et les micro-organismes en laboratoire, sur les composants des produits pris séparément et dans les compositions du biostimulant de l'invention afin de prouver son innocuité sur le sol et les nappes.

### Résultats des essais

Les essais ont permis de mettre en évidence les effets suivants :
∘ Un rendement supérieur pour les cultures traitées avec une composition biostimulante selon l'invention par rapport au témoin de l'ordre de 11 à 22%, en fonction des conditions et des cultures.
∘ Un rendement supérieur pour les cultures traitées avec une composition biostimulante selon l'invention par rapport à la parcelle traitée avec la zéolithe micronisée pure de l'ordre de 1 à 13 %
∘ Un rendement supérieur pour les cultures traitées avec une composition biostimulante selon l'invention par rapport à la parcelle traitée avec le lithothamne micronisé pur de l'ordre de 2 à 12 %
∘ Une amélioration de la qualité des produits récoltés pour les parcelles traitées avec une composition biostimulante selon l'invention par rapport au témoin :
   - Poids des baies de raisins supérieur de l'ordre de 10 à 20 %
   - Teneur en huile supérieure pour la graine de colza de l'ordre de 2 points
   - Teneur en huile supérieure pour la graine de chanvre de l'ordre de 2 points
   - Poids de mille grains (PMG), pour le grain de blé supérieur de l'ordre de 5 grammes
   - Stress hydrique moindre, constaté particulièrement sur les grains de colza, blé et maïs, car les conditions étaient arides, les grains avaient un meilleur aspect et était mieux remplis (se vérifie avec l'augmentation du PMG).
   - Teneur en sucre des baies de raisin supérieure (taux de Brix).
   - Meilleur aspect et calibre des produits récoltés : pomme de terre et vigne
∘ Augmentation de la biomasse en particulier sur le chanvre où la taille des tiges était plus importante ; vérifiée également en laboratoire sur du colza, avec 14% de biomasse totale supplémentaire pour l'échantillon traité avec une composition comprenant de la zéolithe et des algues marines calcaires par rapport au témoin alors que l'augmentation de la biomasse obtenue par utilisation de la zéolithe seule était de 2% et celle obtenue par utilisation des algues calcaires seules était de 4%.
∘ Saisons de cultures plus courtes, effet vérifié en laboratoire sur du colza et en champ sur du chanvre. L'effet constaté était particulièrement intéressant sur le chanvre avec une récolte précoce.
∘ Réduction des besoins de fertilisation azoté lors d'un traitement avec une composition biostimulante selon l'invention : on a noté, notamment, qu'une diminution de 50% des apports d'azote sur blé (réparti sur trois apports), associée à un traitement de 3 fois 3 kilo par hectare de composition biostimulante, a généré des rendements équivalents au témoin sans biostimulant et apport d'azote à 100%.
∘ Réduction des besoins de traitement fongique, en particulier une diminution de 20 à 50% des besoins de traitement fongicide des parcelles traitées. Cet effet est dû à une action mécanique d'assèchement de la surface foliaire, limitant le développement des maladies fongiques.
∘ Le biostimulant ne provoque aucun déséquilibre ni aucune nuisance, ni sur l'environnement, ni sur le sol, ni sur les nappes, ni sur les organismes vivants, de plus il est naturel, et pourra être utilisé en agriculture biologique et conventionnelle.

La figure 1 montre, de manière schématique et très simplifiée, l'application foliaire d'une suspension 10 de la composition biostimulante selon l'invention. Des exemples de dosage ont été indiqués plus haut. La composition contient de fines particules de zéolithe 12 et d'algues calcaires 14. L'application de la suspension sur les plantes 18 est effectuée au moyen d'un pulvériseur 16. La suspension mouille les feuilles des plantes. Une partie des particules pénètrent dans les stomates des plantes. Une deuxième partie forme un fin film de particules de zéolithe et d'algues calcaires sur la cuticule. La partie de la suspension qui ruissèle dans le sol 20 y apporte des nutriments, utiles à la croissance des végétaux. Les algues calcaires contribuent à une stabilisation du pH du sol au niveau des racines. La zéolithe améliore la CEC, l'aération à proximité des racines et ce de manière durable, car elle est non lessivable et pérenne dans le sol.

Alors que des modes de réalisation particuliers viennent d'être décrits en détail, l'homme du métier appréciera que diverses modifications et alternatives à ceux-là puissent être développées à la lumière de l'enseignement global apporté par la présente divulgation de l'invention. Par conséquent, les agencements et/ou procédés spécifiques décrits ci-dedans sont censés être donnés uniquement à titre d'illustration, sans intention de limiter la portée de l'invention, qui est déterminée par l'étendue des revendications rattachées.

## Revendications

1. Composition biostimulante pour végétaux, **caractérisée en ce qu'**elle comprend de la zéolithe micronisée et des algues calcaires micronisées, le rapport massique entre la teneur en zéolithe et la teneur en algues calcaires étant compris entre 0.1 et 10, la zéolithe et les algues calcaires ayant respectivement une granulométrie telle que le diamètre D90 soit inférieur à 20 µm, lorsque le diamètre D90 est mesuré par granulométrie laser en accord avec la norme ISO 13320:2020 sur la base du modèle de diffraction de Fraunhofer, la zéolithe et les algues calcaires représentant ensemble au moins 60% en masse, et de préférence au moins 75%, voire 90%, en masse, de la matière solide de la composition, la composition comprenant, outre les algues calcaires, des débris coquilliers micronisés ou d'autres concrétions calcaires biogènes marines.

2. La composition biostimulante selon la revendication 1, dans laquelle le le rapport massique entre la teneur en zéolithe et la teneur en algues calcaires est compris entre 0,25 et 4, dans laquelle la zéolithe et les algues calcaires représentent ensemble au moins 90% en masse de la matière solide de la composition, et dans laquelle tout éventuel composant solide autre que la zéolite et une algue calcaire est présent dans la composition avec une teneur massique individuelle ne dépassant pas 50% de la plus petite valeur parmi la teneur massique en algues calcaires et la teneur massique en zéolithe.

3. La composition biostimulante selon la revendication 1 ou 2, sous forme de poudre mouillable.

4. La composition biostimulante selon la revendication 1 ou 2, sous forme de concentré en suspension.

5. La composition biostimulante selon la revendication 1 ou 2, sous forme de granulés dispersibles dans l'eau.

6. La composition biostimulante selon l'une quelconque des revendications 1 à 5, dans laquelle le diamètre D90 de la zéolithe est inférieur à 15 µm, de préférence inférieur à 10 µm ou à 4 µm.

7. La composition biostimulante selon l'une quelconque des revendications 1 à 6, dans laquelle le diamètre D90 des algues calcaires est inférieur à 15 µm, de préférence inférieur à 10 µm ou à 4 µm.

8. La composition biostimulante selon l'une quelconque des revendications 1 à 7, dans laquelle les algues calcaires sont des algues calcaires mortes.

9. La composition biostimulante selon l'une quelconque des revendications 1 à 8, comprenant, outre les algues calcaires, d'autres concrétions calcaires biogènes marines..

10. La composition biostimulante selon la revendication 9, dans laquelle les concrétions calcaires biogènes marines sont non rocheuses.

11. La composition biostimulante selon l'une quelconque des revendications 1 à 10, comprenant entre 0,1 et 20% en masse, de préférence entre 2 et 4% en masse, d'oligoéléments bioassimilables sélectionnés parmi le manganèse, le zinc, le molybdène, le bore, le fer, le cuivre, le soufre, ainsi que les oxydes et sels bioassimilables de ceux-ci.

12. La composition biostimulante selon l'une quelconque des revendications 1 à 11, dans laquelle la zéolithe comprend au moins 50% en masse, de préférence au moins 75% en masse, de chabazite et/ou de clinoptilolite.

13. Suspension aqueuse comprenant entre 0,5% et 5% en masse, de préférence entre 0,5% et 2% en masse, de la composition biostimulante selon l'une quelconque des revendications 1 à 12.

14. Méthode d'utilisation de la composition biostimulante selon l'une quelconque des revendications 1 à 12 en agriculture, comprenant l'application foliaire de la composition biostimulante sur des plantes.

15. Méthode d'utilisation selon la revendication 14, dans lequel le dosage de la composition biostimulante est tel qu'il apporte, par hectare et par application, entre 1 et 5 kg, de préférence entre 1,5 et 4 kg, de matière solide de la composition biostimulante.

## Patentansprüche

1. Biostimulierende Zusammensetzung für Pflanzen, **dadurch gekennzeichnet, dass** sie mikronisierten Zeolith und mikronisierte Kalkalgen umfasst, wobei das Massenverhältnis zwischen dem Gehalt an Zeolith und dem Gehalt an Kalkalgen zwischen 0,1 und 10 beträgt, wobei der Zeolith und die Kalkalgen jeweils eine derartige Partikelgröße aufweisen, dass der Durchmesser D90 kleiner als 20 µm ist, wenn der Durchmesser D90 mittels Lasergranulometrie gemäß der Norm ISO 13320:2020 auf der Grundlage des Fraunhoferschen Beugungsmodells gemessen wird, wobei der Zeolith und die Kalkalgen zusammen mindestens 60 Massen-%, vorzugsweise mindestens 75 Massen-% oder sogar 90 Massen-%, bezogen auf die Feststoffmasse der Zusammensetzung, ausmachen, wobei die Zusammensetzung neben den Kalkalgen mikronisierte Muschelschalenreste oder andere biogene marine Kalkkonkretionen enthält.

2. Die biostimulierende Zusammensetzung nach Anspruch 1, wobei das Massenverhältnis zwischen dem Gehalt an Zeolith und dem Gehalt an Kalkalgen zwischen 0,25 und 4 beträgt, wobei der Zeolith und die Kalkalgen zusammen mindestens 90 Massen-%, bezogen auf die Feststoffmasse der Zusammensetzung, ausmachen, und wobei jeder mögliche andere feste Bestandteil als der Zeolith und eine Kalkalge in der Zusammensetzung in einem individuellen Massengehalt vorhanden ist, der 50 % des kleineren Werts aus dem Massengehalt an Kalkalgen und dem Massengehalt an Zeolith nicht überschreitet.

3. Die biostimulierende Zusammensetzung nach Anspruch 1 oder 2 in Form eines benetzbaren Pulvers.

4. Die biostimulierende Zusammensetzung nach Anspruch 1 oder 2 in Form eines Suspensionskonzentrats.

5. Die biostimulierende Zusammensetzung nach Anspruch 1 oder 2 in Form von im Wasser dispergierbarem Granulat.

6. Die biostimulierende Zusammensetzung nach einem der Ansprüche 1 bis 5, wobei der Durchmesser D90 des Zeoliths kleiner als 15 µm, vorzugsweise kleiner als 10 µm oder 4 µm ist.

7. Die biostimulierende Zusammensetzung nach einem der Ansprüche 1 bis 6, wobei der Durchmesser D90 der Kalkalgen kleiner als 15 µm, vorzugsweise kleiner als 10 µm oder kleiner als 4 µm ist.

8. Die biostimulierende Zusammensetzung nach einem der Ansprüche 1 bis 7, wobei die Kalkalgen abgestorbene Kalkalgen sind.

9. Die biostimulierende Zusammensetzung nach einem der Ansprüche 1 bis 8, die neben den Kalkalgen andere biogene marine Kalkkonkretionen umfasst.

10. Die biostimulierende Zusammensetzung nach Anspruch 9, wobei die biogenen marinen Kalkkonkretionen nicht gesteinsartig sind.

11. Die biostimulierende Zusammensetzung nach einem der Ansprüche 1 bis 10, die zwischen 0,1 und 20 Massen-%, vorzugsweise zwischen 2 und 4 Massen-%, bioassimilierbare Spurenelemente enthält, ausgewählt aus Mangan, Zink, Molybdän, Bor, Eisen, Kupfer, Schwefel sowie deren bioassimilierbare Oxide und Salze.

12. Die biostimulierende Zusammensetzung nach einem der Ansprüche 1 bis 11, wobei der Zeolith mindestens 50 Massen-%, vorzugsweise mindestens 75 Massen-%, Chabazit und/oder Klinoptilolith umfasst.

13. Wässrige Suspension, die zwischen 0,5 und 5 Massen-%, vorzugsweise zwischen 0,5 und 2 Massen-%, der biostimulierenden Zusammensetzung gemäß einem der Ansprüche 1 bis 12 enthält.

14. Verfahren zur Verwendung der biostimulierenden Zusammensetzung gemäß einem der Ansprüche 1 bis 12 in der Landwirtschaft, umfassend die Blattapplikation der biostimulierenden Zusammensetzung auf Pflanzen.

15. Verfahren zur Verwendung gemäß Anspruch 14, wobei die Dosierung der biostimulierenden Zusammensetzung derart ist, dass pro Hektar und pro Anwendung zwischen 1 und 5 kg, vorzugsweise zwischen 1,5 und 4 kg, Feststoff der biostimulierenden Zusammensetzung ausgebracht werden.

## Claims

1. A biostimulant composition for plants, **characterized in that** it comprises micronized zeolite and micronized calcareous algae, the mass ratio between the zeolite content and the calcareous algae content being comprised between 0.1 and 10, the zeolite and the calcareous algae respectively having a granulometry such that the diameter D90 is less than 20 µm, when the diameter D90 is measured by laser granulometry according to ISO 13320:2020 based on the Fraunhofer diffraction model, the zeolite and the calcareous algae together accounting for at least 60 wt. %, and preferably at least 75 wt. % or even 90 wt. %, of the solid material of the composition, the composition comprising, apart the calcareous algae, micronized shell debris or other marine biogenic calcareous concretions.

2. The biostimulant composition according to claim 1, wherein the mass ratio between the zeolite content and the calcareous algae content is comprised between 0.25 and 4, wherein the zeolite and the calcareous algae together accounting for at least 90 wt. % of the solid material of the composition, and wherein any solid component other than zeolite and a calcareous alga is present in the composition with an individual mass content not exceeding 50% of the smallest value among the calcareous algae mass content and the zeolite mass content.

3. The biostimulant composition according to claim 1 or 2, as a wettable powder.

4. The biostimulant composition according to claim 1 or 2, as a suspension concentrate.

5. The biostimulant composition according to claim 1 or 2, as water-dispersible granules.

6. The biostimulant composition according to anyone of claims 1 to 5, wherein the diameter D90 of the zeolite is less than 15 µm, preferably less than 10 µm or 4 µm.

7. The biostimulant composition according to anyone of claims 1 to 6, wherein the diameter D90 of the calcareous algae is less than 15 µm, preferably less than 10 µm or 4 µm.

8. The biostimulant composition according to anyone of claims 1 to 7, wherein the calcareous algae are dead calcareous algae.

9. The biostimulant composition according to anyone of claims 1 to 8, comprising, apart the calcareous algae, other marine biogenic calcareous concretions.

10. The biostimulant composition according to claim 9, wherein the marine biogenic calcareous concretions are non-rocky.

11. The biostimulant composition according to anyone of claims 1 to 10, comprising between 0.1 wt. % and 20 wt. %, preferably between 2 wt. % and 4 wt. %, of bioassimilable trace elements selected among manganese, zinc, molybdenum, boron, iron, copper, sulphur as well as the bioassimilable oxides and salts thereof.

12. The biostimulant composition according to anyone of claims 1 to 11, wherein the zeolite comprises at least 50 wt. %, preferably at least 75 wt. %, of chabazite or clinoptilolite.

13. An aqueous suspension comprising between 0.5 wt. % and 5 wt. %, preferably between 0. 5 wt. % and 2 wt. %, of the biostimulant composition according to anyone of claims 1 to 12.

14. A method of using the biostimulant composition according to anyone of claims 1 to 12 in agriculture, comprising foliar application of the biostimulant composition to plants.

15. The method of using according to claim 14, wherein the dosage of the biostimulant composition is such that it provides, per hectare and per application, between 1 kg and 5 kg, preferably between 1.5 kg and 4 kg, of solid material of the biostimulant composition.
